Europäisches Patentamt

(19) European Patent Office

Office européen des brevets

(11) EP 0 605 327 B1

## (12) FASCICULE DE BREVET EUROPEEN

(45) Date de publication et mention
de la délivrance du brevet:
**03.06.1998 Bulletin 1998/23**

(51) Int. Cl.⁶: **B32B 31/00**

(21) Numéro de dépôt: 93403200.4

(22) Date de dépôt: 28.12.1993

(54) **Procédé de fabrication d'une tôle à structure multicouche et tôle obtenue par ce procédé**

Schichtstoff aus Metallblech und Verfahren zu deren Herstellung

Method for manufacturing laminated short metal, and laminate thus produced

(84) Etats contractants désignés:
**AT BE CH DE DK ES FR GB GR IE IT LI LU NL PT
SE**

(30) Priorité: **31.12.1992 FR 9216009**

(43) Date de publication de la demande:
**06.07.1994 Bulletin 1994/27**

(73) Titulaires:
• **USINOR
92800 Puteaux (FR)**
• **SOLLAC
92800 Puteaux (FR)**

(72) Inventeurs:
• **Cunat, Pierre-Jean
F-71130 Gueugnon (FR)**
• **Mantel, Marc
F-73540 La Bathie (FR)**
• **Tremouilles, Gilles
F-92100 Boulogne Billancourt (FR)**

(74) Mandataire:
**Moncheny, Michel et al
c/o Cabinet Lavoix
2 Place d'Estienne d'Orves
75441 Paris Cedex 09 (FR)**

(56) Documents cités:
EP-A- 0 013 146          EP-A- 0 144 822
FR-A- 2 191 810          US-A- 3 712 849
US-A- 3 767 500          US-A- 4 056 422
US-A- 4 223 073

• **PATENT ABSTRACTS OF JAPAN vol. 6, no. 120
(M-140)(998) 3 Juillet 1982 & JP-A-57 046 843
(AKIRA KISHIMOTO) 17 Mars 1982**

Remarques:
Le dossier contient des informations techniques présentées postérieurement au dépôt de la demande et ne figurant pas dans le présent fascicule.

**Description**

La présente invention concerne un procédé de fabrication d'une tôle à structure multicouche dite tôle sandwich, composée de feuilles métalliques de compositions métallurgiques différentes, planes ou bobinées, issues d'une ligne de laminage et formant des bandes.

Selon un tel procédé connu :

- on enduit au moins une des bandes d'un film viscoélastique ayant des propriétés d'adhésivité développables à chaud,
- on assemble la bande enduite et une autre bande pour former la structure multicouche,
- on presse la structure multicouche et on la chauffe pour provoquer l'adhérence entre le film viscoélastique et les bandes métalliques

Un tel procédé est mis en oeuvre en particulier pour l'obtention d'une tôle à structure multi-couche comprenant une bande d'acier inoxydable et une bande d'acier non inoxydable, la seconde étant environ cinq fois plus épaisse que la première.

Une telle structure peut être réalisée lorsque la bande en acier non inoxydable est une bande qui supporte les contraintes générées par la bande d'acier inoxydable placée sous tension lors de dilatations thermiques différentielles. La faible épaisseur relative de la bande d'acier inoxydable, sous tension, évite les déformations importantes de l'autre tôle d'acier. Toutefois, une telle structure comportant deux tôles d'épaisseurs différentes est inadaptée à la mise en oeuvre de la tôle, en particulier dans le domaine de l'emboutissage.

Le principal problème provient du fait que les coefficients de dilatation linéaires des matériaux dont sont composées les bandes sont différents. Le coefficient est plus élevé pour l'acier inoxydable que pour un acier doux, ce qui entraîne, après un chauffage homogène, la présence de contraintes résiduelles lorsque, la tôle multicouche est refroidie, la bande en acier inoxydable se trouvant en tension alors que la bande en acier doux est en compression.

De telles contraintes engendrent la formation de plis sur la face en compression ce oui rend la tôle inutilisable.

Le but de l'invention est de permettre la réalisation d'une tôle de structure multicouche présentant notamment de bonnes qualités d'emboutissage.

Elle a pour objet un procédé tel que défini ci-dessus, caractérisé en ce que préalablement au pressage on soumet chacune des bandes à une élévation de température spécifique, fonction de la composition métallurgique de chaque bande, de façon à assurer à chacune desdites bandes sensiblement une même dilatation thermique linéaire déterminée, lesdites bandes étant respectivement portées à des températures TAc et TAi telles que $TAc \times \alpha Ac = TAi \times \alpha Ai$, où $\alpha Ac$ et $\alpha Ai$ sont les coefficients de dilatation linéaire respectifs des matériaux constituant les deux bandes.

Suivant d'autres caractéristiques :

- l'élévation de température spécifique de chacune des bandes est réalisée avant enduction ou mise en place du film viscoélastique;
- l'élévation de température spécifique de chacune des bandes est réalisée après mise en place du film visco-élastique;
- l'élévation de température spécifique de chacune des bandes est réalisée après assemblage des bandes.
- l'élévation de température spécifique de chacune des bandes est réalisée après mise en place du film viscoélastique ou après assemblage des bandes et est suffisante pour provoquer simultanément l'adhérence entre le film viscoélastique et les bandes métalliques.
- simultanément au pressage ou après pressage, on effectue un chauffage supplémentaire de la structure multicouche pour provoquer l'adhérence entre le film viscoélastique et les bandes métalliques, lorsque l'élévation de température spécifique de chacune des bandes est insuffisante pour provoquer l'adhérence entre le film viscoélastique et les bandes.
- on assemble une bande d'acier inoxydable et une bande d'acier doux, les bandes ayant sensiblement la même épaisseur;
- la bande d'acier inoxydable présente des propriétés d'emboutissage en expansion et rétreint correspondant à un rapport limite d'emboutissage désigné par l'abréviation LDR (Limiting Drawing Ratio) supérieur à 2 et de préférence compris entre 2 et 2,2;
- la bande d'acier doux présente une caractéristique mécanique en limite élastique inférieure à 180 N/mm$^2$ et un LDR compris entre 2,1 et 2,3;
- on enduit une bande d'un film viscoélastique choisi parmi une résine liquide avec un solvant, une émulsion en dispersion aqueuse, un matériau thermoplastique, un polymère, un copolymère.

L'invention a aussi pour objet une tôle à structure multicouche dite tôle sandwich, obtenue par le procédé et composée de bandes métalliques de compositions métallurgiques différentes, planes ou bobinées, issues d'une ligne de laminage. Elle se caractérise en ce qu'elle comprend une bande d'acier inoxydable et une bande d'acier doux d'épaisseurs égales ou voisines comprises entre 0,05 et 1 mm, assemblées par un film viscoélastique ayant une épaisseur comprise entre 20 et 100 µm et de préférence entre 50 et 80 µm.

L'acier inoxydable est un acier austénitique et la bande d'acier doux peut être chromatée.

Une tôle à structure multicouche dite tôle sandwich est composée d'au moins deux bandes métalliques laminées à froid, de compositions métallurgiques différentes, planes ou sous forme de bobines, liées entre elles par une âme assurant la cohésion de la structure.

Pour obtenir cette tôle, on applique sur l'une des bandes métalliques un film d'un composé viscoélastique. Ce composé peut être à l'état de résine solvatée ou de film extrudé. Suivant le type de composé, cette opération peut être suivie d'une évaporation de solvant. Ensuite, on applique sur la bande recouverte par le film viscoélastique, une autre bande pour former la structure multicouche. En même temps que l'on presse, en continu, la structure multicouche par exemple sous une pression comprise entre $10^5$ et $10^6$ Pa, on élève sa température par exemple entre 180 et 250°C de manière à réaliser l'adhérence entre les bandes et le film viscoélastique.

Selon l'invention, préalablement au pressage, on soumet chaque bande métallique à une élévation de température spécifique, fonction de la nature métallurgique de chacune des bandes. Ce chauffage peut être effectué par induction, conduction thermique, effet Joule ou par rayonnement infra-rouge. L'écart de température entre les deux bandes peut être compris entre 40 et 100° C environ et la durée de chauffage peut être comprise entre 5 et 30 s. selon le procédé utilisé. On soumet ainsi chacune desdites bandes à une dilatation thermique linéaire déterminée. Cette élévation de température peut être effectuée avant ou après enduction du film viscoélastique. Dans ce dernier cas, l'élévation de température différentielle des bandes métalliques peut être suffisante pour provoquer simultanément, au moins partiellement, la polymérisation ou le durcissement de la couche intermédiaire d'adhésif.

Par exemple, une bande en acier inoxydable forme la première couche et présente des propriétés élevées d'emboutissage en expansion et en rétreint. On utilise de préférence un acier inoxydable austénitique dont le LDR est supérieur à 2,0 et la flèche ERICHSEN supérieure à 11,5 mm pour une épaisseur de 0,7 mm.

La seconde bande d'acier est en acier doux dont la limite élastique est relativement basse c'est-à-dire de l'ordre de 160 N/mm$^2$ et qui présente un LDR d'environ 2,2. Avant la réalisation de la structure multicouche, la bande d'acier doux peut être soumise à un traitement de chromatation afin de favoriser l'adhérence du film viscoélastique.

La bande d'acier doux peut également être revêtue par galvanisation ou électrozingage.

Les deux bandes d'acier inoxydable et d'acier doux ont sensiblement la même épaisseur qui peut varier entre 0,05 et 1 mm.

Avantageusement le film viscoélastique liant les deux bandes est un polymère choisi parmi le polyacétate de vinyle, le polychlorure de vinyle, le polystyrène, le polybutadiène ou encore un copolymère choisi parmi les copolymères styrène/butadiène, acétate de vinyle/ester maléique, les esters acrylique/styrène, le polyuréthanne, le polyester ou encore un mélange d'homopolymère et de copolymère.

De préférence, le film viscoélastique contient en outre un plastifiant qui peut être choisi parmi le dibutylphtalate, le tributylphosphate, un ester et/ou un polyester.

Les opérations d'assemblage des bandes d'acier et du film viscoélastique s'effectuent sur une ligne de calandrage de bandes de grande longueur conditionnées sous forme de bobines. Il est nécessaire, selon l'invention, de chauffer plus fortement la bande en acier doux car son coefficient de dilatation linéaire $\alpha Ac$ est inférieur au coefficient de dilatation linéaire $\alpha Ai$ de l'acier inoxydable austénitique. Pour information $\alpha Ac$ est égal à $12.10^{-6\circ}C^{-1}$ et $\alpha Ai$ est égal à $18.10^{-6\circ}C^{-1}$.

La bande en acier doux est portée à une température supérieure à celle de l'acier inoxydable de manière à satisfaire la relation suivante :

$$TAc \times \alpha Ac = TAi \times \alpha Ai$$

dans laquelle TAc et TAi sont respectivement les températures spécifiques de la bande d'acier doux et de la bande d'acier inoxydable.

Grâce à ce chauffage différentiel, après refroidissement les déformations résiduelles dans la structure multicouche sont pratiquement négligeables.

Les tôles à structure multicouche obtenues par le procédé sont développées industriellement pour répondre aux caractéristiques principales suivantes :

- résistance élevée à la corrosion;
- amortissement des vibrations au voisinage des fréquences de résonances de la structure multicouche;
- amortissements des bruits aériens;
- aptitude à la conformation et à l'emboutissage profond.

L'invention permettant l'obtention de tôles de structure multicouche offrant par leur conception générale et leur géométrie des caractéristiques phoniques, mécaniques, de mise en oeuvre, en particulier dans le domaine de l'emboutissage profond, on va décrire ci-après des caractéristiques attachées auxdites tôles, en particulier des caractéristiques d'amortissement et d'emboutissage.

- <u>amortissement</u>

Les caractéristiques d'amortissement sont déterminées par la mesure du coefficient d'amortissement ou facteur de perte noté β en utilisant un dispositif basé sur la mise en évidence des pics de résonance sous vibration continue.

A cet effet, des éprouvettes de tôle multi-couche, de dimensions normalisées, sont disposées verticalement, l'une des extrémités étant encastrée, l'autre étant libre. Ces éprouvettes sont soumises à des vibrations forcées dans une gamme de fréquences de 10 Hz à 1 500 Hz.

Un émetteur électromagnétique crée une vibration transversale à l'extrémité libre et un récepteur identique mesure l'amplitude de la vibration près de l'extrémité encastrée. Au cours d'un balayage en fréquence, la courbe du gain émetteur/récepteur (courbe de résonance) passe par plusieurs pics dont la largeur est directement liée au coefficient d'amortissement. Si f. est la fréquence et $\Delta$f, la largeur du pic à mi-hauteur, le facteur de perte est donné par :

$$\beta = \Delta f/f.$$

Par un balayage très fin en fréquence autour des fréquences de résonance déterminées après un balayage plus large, il est possible de tracer une courbe représentant le facteur d'amortissement β en fonction de la fréquence.

Les tableaux 1, 2 et 3 présentent, d'une part les valeurs du coefficient β d'une tôle de structure multicouche en fonction de la fréquence et d'autre part, les valeurs du coefficient β en fonction de la température de la tôle à deux fréquences données.

Dans le premier exemple (tableaux 1 et 2), la tôle selon l'invention est constituée d'une structure multicouche formée d'une âme ayant de préférence une épaisseur de 50 à 80 $\mu$m, pressée entre deux bandes laminées, l'une étant en acier inoxydable austénitique de 0,2 mm d'épaisseur, l'autre étant en acier doux de 0,2 mm d'épaisseur. L'âme est obtenue à partir d'un polymère modifié de polyacétate de vinyle. L'assemblage est obtenu en soumettant la structure multicouche à une pression de $10^5$ Pa après un chauffage différentiel à 200 et 240°C, respectivement.

Le coefficient d'amortissement ou coefficient de perte β est compris entre 0,05 et 0,12 dans une plage de fréquences allant de 60 à 1500 Hz (tableau 1). Pour des fréquences de 500 et 1500 Hz et pour des températures variant entre 30 et 120° C, le coefficient d'amortissement β reste également compris entre 0,05 et 0,12 (tableau 2).

Tableau 1

| Coefficient d'amortissement β en fonction de la fréquence à la température ambiante | |
|---|---|
| FREQUENCE (Hz) | COEFFICIENT D'AMORTISSEMENT β |
| 60 | 0,050 |
| 80 | 0,060 |
| 200 | 0,080 |
| 400 | 0,12 |
| 1500 | 0,10 |

Tableau 2

| Coefficient d'amortissement β en fonction de la température | | |
|---|---|---|
| TEMPERATURE (°C) | COEFFICIENT D'AMORTISSEMENT β | |
| | 500 Hz | 1500 HZ |
| 30 | 0,06 | 0,05 |
| 60 | 0,11 | 0,08 |
| 90 | 0,12 | 0,10 |
| 120 | 0,05 | 0,06 |

Dans le deuxième exemple, toutes choses étant égales par ailleurs, le polymère est un polyester. Les coefficients d'amortissement β sont alors compris entre 0,035 et 0,21 dans une gamme de fréquences s'étendant de 30 à 360 Hz à la température de 40°C (tableau 3).

Tableau 3

| Coefficient d'amortissement β en fonction de la fréquence à 40°C | |
|---|---|
| FREQUENCE (Hz) | COEFFICIENT D'AMORTISSEMENT β |
| 30 | 0,035 |
| 150 | 0,11 |
| 360 | 0,21 |

- emboutissage

La contrainte de cisaillement du film viscoélastique est supérieure à 10 MPa. Cette contrainte est mesurée à l'aide d'une éprouvette de traction sollicitant le film polymère en cisaillement. Les polymères utilisés permettent d'obtenir des contraintes de cisaillement supérieures à 10 MPa ce qui est indispensable pour éviter la formation de plis lors de l'emboutissage.

De plus, durant l'opération d'emboutissage, on doit appliquer des pressions entre matrice et serre-flan beaucoup plus élevées qu'avec une tôle monolithique d'épaisseur équivalente.

Le tableau 4 donne les caractéristiques d'emboutissage obtenues avec une tôle de structure multicouche dont l'épaisseur totale est de 0,5 mm et dont l'épaisseur du film viscoélastique est de 80 μm. Dans tous ces essais, le substrat en acier inoxydable austénitique de type 18% de chrome, 9% de nickel est placé à l'intérieur de l'embouti.

Tableau 4

| TYPE D'ESSAI | |
|---|---|
| RETREINT (EMBOUTI DE 120 mm DE DIAMETRE) | β max = 1.90-2.0 |
| EXPANSION (EMBOUTI DE 120 mm DE DIAMETRE) | H max (mm) = 50.55 |
| β max = Rapport limite d'emboutissage<br>H max = Flèche maximale (rupture). | |

**Revendications**

1. Procédé de fabrication d'une tôle à structure multicouche dite tôle sandwich, composée de feuilles métalliques de compositions métallurgiques différentes planes ou bobinées, issues d'une ligne de laminage et assemblées à chaud selon lequel,

   - on enduit au moins une des bandes d'un film viscoélastique ayant des propriétés d'adhésivité,
   - on assemble la bande enduite et une autre bande pour former la structure multicouche,
   - on presse la structure multicouche, caractérisé en ce que préalablement au pressage on soumet chacune des bandes à une élévation de température spécifique, fonction de la composition métallurgique de chaque bande, de façon à assurer à chacune desdites bandes sensiblement une même dilatation thermique linéaire déterminée, lesdites bandes étant respectivement portées à des températures TAc et TAi telles que TAc x $\alpha$Ac = TAi x $\alpha$Ai, où $\alpha$Ac et $\alpha$Ai sont les coefficients de dilatation linéaire respectifs des matériaux constituant les deux bandes.

2. Procédé selon la revendication 1, caractérisé en ce que l'élévation de température spécifique de chacune des bandes est réalisée avant enduction ou mise en place du film viscoélastique.

3. Procédé selon la revendication 1, caractérisé en ce que l'élévation de température spécifique de chacune des bandes est réalisée après enduction ou mise en place du film viscoélastique.

4. Procédé selon la revendication 1, caractérisé en ce que l'élévation de température spécifique de chacune des bandes est réalisée après assemblage des bandes.

5. Procédé selon l'une des revendications 3 et 4, caractérisé en ce que l'élévation de température spécifique des bandes métalliques est suffisante pour provoquer simultanément l'adhérence entre le film viscoélastique et les bandes métalliques.

6. Procédé selon l'une quelconque des revendications 1 à 4, caractérisé en ce que simultanément au pressage ou après pressage on effectue un chauffage supplémentaire de la structure multicouche pour provoquer l'adhérence entre le film viscoélastique et les bandes métalliques.

7. Procédé selon l'une quelconque des revendications 1 à 6, caractérisé en ce qu'on assemble une bande d'acier inoxydable et une bande d'acier doux, les bandes ayant sensiblement la même épaisseur.

8. Procédé selon la revendication 7, caractérisé en ce que la bande d'acier inoxydable présente des propriétés d'emboutissage en expansion et rétreint correspondant à un rapport limite d'emboutissage ou LDR (Limiting Drawing Ratio) supérieur à 2.

9. Procédé selon la revendication 7, caractérisé en ce que la bande d'acier doux présente une caractéristique mécanique en limite élastique inférieure à 180 N/mm$^2$ et un LDR compris entre 2,1 et 2,3.

10. Procédé selon la revendication 1, caractérisé en ce qu'on enduit une bande d'un film viscoélastique choisi parmi une résine liquide avec un solvant, une émulsion en dispersion aqueuse, un matériau thermoplastique, un polymère, un copolymère.

11. Tôle de structure multicouche dite tôle sandwich composée de feuilles métalliques de composition métallurgique différentes, planes ou bobinées, issues d'une ligne de laminage, obtenue par le procédé selon l'une quelconque des revendications 1 à 10, caractérisée en ce qu'elle comprend une bande d'acier inoxydable et une bande d'acier doux d'épaisseurs égales ou voisines comprises entre 0,05 et 1 mm, assemblées par un film viscoélastique.

12. Tôle selon la revendication 11, caractérisée en ce que la bande d'acier inoxydable est en acier austénitique.

13. Tôle selon l'une quelconque des revendications 11 et 12, caractérisée en ce que la bande d'acier doux est chromatée.

**Claims**

1. Process for the production of a multilayered sheet, a so-called sandwich sheet, composed of plane or wound metal foils of different metallurgical compositions delivered from a rolling line and mounted hot, according to which

   - at least one of the bands of an elastic-viscous film with adhesive properties is coated,
   - the coated band and another band are mounted to form the multilayered structure,
   - the multilayered structure is pressed
   
   characterised in that prior to pressing, each of the bands is subjected to a specific increase in temperature, dependent upon the metallurgical composition of each band, so as to essentially assure the same determined thermal elongation for each of said bands, said bands being respectively brought to temperatures TAc and TAi such that $TAc \times \alpha Ac = TAi \times \alpha Ai$, where $\alpha Ac$ and $\alpha Ai$ are the respective coefficients of elongation of the materials forming the two bands.

2. Process according to Claim 1, characterised in that the specific increase in temperature of each of the bands is achieved before coating or positioning of the elastic-viscous film.

3. Process according to Claim 1, characterised in that the specific increase in temperature of each of the bands is achieved after coating or positioning of the elastic-viscous film.

4. Process according to Claim 1, characterised in that the specific increase in temperature of each of the bands is achieved after mounting the bands.

5. Process according to one of Claims 3 and 4, characterised in that the specific increase in temperature of the metal bands is sufficient to simultaneously achieve adhesion between the elastic-viscous film and the metal bands.

6. Process according to any one of Claims 1 to 4, characterised in that at the same time as the pressing or after pressing, additional heating of the multilayered structure is performed to achieve adhesion between the elastic-viscous film and the metal bands.

7. Process according to any one of Claims 1 to 6, characterised in that a stainless steel band and a low-carbon steel band are mounted, said bands essentially having the same thickness.

8. Process according to Claim 7, characterised in that the stainless steel band has drawing properties in expansion and reduction corresponding to an LDR (limiting drawing ratio) of greater than 2.

9. Process according to Claim 7, characterised in that the low-carbon steel band has a mechanical elastic limit property of less than 180 N/mm$^2$ and an LDR in the range of between 2.1 and 2.3.

10. Process according to Claim 1, characterised in that the band to be coated is of an elastic-viscous film selected from a liquid resin with a solvent, an emulsion in aqueous solution, a thermoplastic material, a polymer, a copolymer.

11. Multilayered sheet, a so-called sandwich sheet, composed of plane or wound metal foils of different metallurgical compositions delivered from a rolling line, formed by the process according to any one of Claims 1 to 10, characterised in that it comprises a stainless steel band and a low-carbon steel band of equal or similar thicknesses in the range of between 0.05 and 1 mm, mounted by an elastic-viscous film.

12. Sheet according to Claim 11, characterized in that the stainless steel band is an austenitic steel.

13. Sheet according to any one of Claims 11 and 12, characterised in that the low-carbon steel band is chromised.

**Patentansprüche**

1. Verfahren zur Herstellung eines Schichtstoffes aus Metallblech, Sandwichblech genannt, plan oder aufgespult, bestehend aus Metallfolien unterschiedlicher metallurgischer Zusammensetzung, hergestellt in einer Folge von Walzvorgängen und unter Wärme verbunden,
   wobei man

- wenigstens ein Band mit einem viskoelastischen Film mit adhäsiven Eigenschaften bestreicht,
- das bestrichene Band mit einem weiteren Band unter Ausbildung der Schichtstruktur verbindet,
- die Schichtstruktur preßt, dadurch gekennzeichnet, daß man vor dem Pressen jedes Band einer spezifischen Temperaturerhöhung derart unterwirft in Abhängigkeit von der metallurgischen Zusammensetzung jedes Bandes, daß jedes Band der gleichen vorherbestimmten linearen thermischen Ausdehnung unterliegt, wobei die Bänder auf die Temperaturen TAc und TAi erwärmt werden, so daß TAc x $\alpha$Ac = TAi x $\alpha$Ai ist, worin $\alpha$Ac und $\alpha$Ai die jeweiligen linearen Ausdehnungskoeffizienten der Materialien der beiden Bänder sind.

2. Verfahren gemäß Anspruch 1, dadurch gekennzeichnet, daß man die spezifische Temperaturerhöhung der jeweiligen Bänder vor dem Bestreichen oder Aufbringen des viskoelastischen Films durchführt.

3. Verfahren gemäß Anspruch 1, dadurch gekennzeichnet, daß man die spezifische Temperaturerhöhung der jeweiligen Bänder nach dem Bestreichen oder Aufbringen des viskoelastischen Films durchführt.

4. Verfahren gemäß Anspruch 1, dadurch gekennzeichnet, daß man die spezifische Temperaturerhöhung der jeweiligen Bänder vor dem Verbinden der Bänder durchführt.

5. Verfahren gemäß einem der Ansprüche 3 und 4, dadurch gekennzeichnet, daß die spezifische Temperaturerhöhung der jeweiligen Metallbänder ausreichend ist, das gleichzeitige Anhaften zwischen dem viskoelastischen Film und den Metallbändern zu bewirken.

6. Verfahren gemäß irgendeinem der Ansprüche 1 bis 4, dadurch gekennzeichnet, daß man gleichzeitig mit dem Pressen oder nach dem Pressen eine zusätzliche Erwärmung des Schichtstoffes bewirkt, um das Anhaften zwischen dem viskoelastischen Film und den Metallbändern zu bewirken.

7. Verfahren gemäß mindestens einem der Ansprüche 1 bis 6, dadurch gekennzeichnet, daß man ein Band aus rostfreiem Stahl und ein Band aus Weichstahl verbindet, wobei die Bänder die gleiche Stärke aufweisen.

8. Verfahren gemäß Anspruch 7, dadurch gekennzeichnet, daß das Band aus rostfreiem Stahl ein Ausbauchungsvermögen zur Ausdehnung oder Zusammenziehung aufweist, welches einem Ausbauchungsverhältnis oder LDR (Limiting Drawing Ratio) von größer als 2 entspricht.

9. Verfahren gemäß Anspruch 7, dadurch gekennzeichnet, daß das Band aus Weichstahl mechanische Eigenschaften mit einer Elastizitätsgrenze unterhalb von 180 N/mm$^2$ und einem LDR von 2,1 bis 2,3 aufweist.

10. Verfahren gemäß Anspruch 1, dadurch gekennzeichnet, daß man ein Band mit einem viskoeslastischen Film, ausgewählt aus einem flüssigen Harz mit einem Lösemittel, einer Emulsion in einer wäßrigen Dispersion, einem thermoplastischen Material, einem Polymer, einem Copolymer, bestreicht.

11. Schichtstoffes aus Metallblech, Sandwichblech genannt, plan oder aufgespult, bestehend aus Metallfolien unterschiedlicher metallurgischer Zusammensetzung, hergestellt in einer Folge von Walzvorgängen, erhalten gemäß mindestens einem der Ansprüche 1 bis 10, dadurch gekennzeichnet, daß dieser ein Band aus rostfreiem Stahl und ein Band aus Weichstahl, mit gleicher oder ähnlicher Stärke, von 0,05 bis 1 mm, verbunden mit einem viskoelastischen Film, umfaßt.

12. Metallblech gemäß Anspruch 11, dadurch gekennzeichnet, daß das Band aus rostfreiem Stahl ein austenitischer Stahl ist.

13. Metallblech gemäß mindestens einem der Ansprüche 11 und 12, dadurch gekennzeichnet, daß das Band aus Weichstahl chromatiert ist.